Europäisches Patentamt

European Patent Office

Office européen des brevets

(19)

(11) Veröffentlichungsnummer : **0 140 054**
**B1**

(12) **EUROPÄISCHE PATENTSCHRIFT**

(45) Veröffentlichungstag der Patentschrift :
09.11.88

(51) Int. Cl.⁴ : **C 10 B 39/02**

(21) Anmeldenummer : **84110593.5**

(22) Anmeldetag : **06.09.84**

(54) **Kokstrockenkühleinrichtung.**

(30) Priorität : **10.09.83 DE 3332702**

(43) Veröffentlichungstag der Anmeldung :
**08.05.85 Patentblatt 85/19**

(45) Bekanntmachung des Hinweises auf die Patenterteilung : **09.11.88 Patentblatt 88/45**

(84) Benannte Vertragsstaaten :
**BE FR IT NL**

(56) Entgegenhaltungen :
**EP-A- 0 071 804**
**FR-A- 633 997**
**US-A- 1 849 158**

(73) Patentinhaber : **Still Otto GmbH**
**Christstrasse 9 Postfach 10 18 50**
**D-4630 Bochum 1 (DE)**

(72) Erfinder : **Nashan, Gerd, Dr.-Ing.**
**Hirschkampstrasse 24**
**D-4200 Oberhausen (DE)**
Erfinder : **Breidenbach, Dieter, Dr.-Ing.**
**Meisenweg 20**
**D-4355 Waltrop (DE)**
Erfinder : **Volmari, Josef, Ing. grad.**
**Heidelbeerweg 16**
**D-4630 Bochum (DE)**
Erfinder : **Lorenz, Kurt, Dr.**
**Habichtstrasse 65**
**D-4321 Hattingen (DE)**
Erfinder : **Dungs, Horst, Dipl.-Ing.**
**Am Düngelbruch 21**
**D-4690 Herne (DE)**

(74) Vertreter : **Dahlkamp, Heinrich-Leo, Dipl.-Ing.**
**Still Otto GmbH Patentabteilung Christstrasse 9**
**D-4630 Bochum 1 (DE)**

## Beschreibung

Die Erfindung bezieht sich auf eine Kokstrockenkühleinrichtung gemäß Oberbegriff des Hauptanspruches.

Aus der DE-OS 29 52 065 ist ein gattungsgemäßes Verfahren zur Trockenkühlung von glühendem Koks bekannt, wobei der Koks in der Kühlkammer seine fühlbare Wärme teils indirekt über Kühlflächen an ein Kühlmedium und teils direkt an ein entgegen der Transportrichtung des heißen Kokses geführtes Kreislaufgas abgibt. Außerdem ist dort vorgeschlagen, daß auch die äußeren Mantelflächen im oberen Bereich des Kühlkammer und die vom heißen Kühlgas durchströmte Ringleitung außerhalb der Vorkammer als wassergekühlte Wandflächen ausgeführt sind. Hauptziel dieser Maßnahmen ist es, die Außenwände möglichst kühl zu halten und die Wärmeverluste zu verringern. Bei der in dieser Schrift vorgesehenen Konstruktion der Kokstrockenkühleinrichtung werden die Kreislaufgase nach Austritt aus der Koksschüttung außen um die Vorkammer über einen Ringspalt abgezogen. Durch den relativ schmalen Ringspalt ist die Querschnittsfläche dabei begrenzt, so daß zur Einhaltung bestimmter, möglichst geringer Gasgeschwindigkeiten auch die Kreislaufgasmenge bzw. die Kühlgeschwindigkeit begrenzt ist.

In der Technik bewährt haben sich in der Zwischenzeit rechteckige oder quadratische Kühlkammern, z. B. gemäß der DE-OS 30 13 722 bzw. DE-OS 31 15 437. Dort wird das Kreislaufgas unterhalb der Beschickungsöffnung der Vorkammer seitlich aus der Kühlkammer abgezogen. Bei derartigen Konstruktionen der Kühlkammer lassen sich die Querschnitte der Kühlkammer erheblich vergrößern, indem man die Anzahl der inneren parallelen Kühlwände vergrößert und damit die Anzahl der Einzelschächte erhöht. Die Kokstrockenkühleinrichtungen haben sich im wesentlichen bewährt, jedoch kann sich bei extrem großer Leistung oberhalb der Kühlwände unter Umständen ein Strömungsprofil der Kreislaufgase in Richtung der Abführungsleitung zu den Abhitzekesseln bilden. Das kann unter Umständen zu einer ungleichmäßigen Abkühlung des Kokses in der Kühlkammer führen.

In der FR-A-633 997 ist eine Kokstrockenkühleinrichtung beschrieben, wobei in dem Kokaschacht oberhalb der Koksschüttung Rohrbündel angeordnet sind, die nahezu parallel zum Neigungswinkel der Schüttböschung angeordnet sind. Auch hierbei ist mit einem ungleichmäßigen Abzug der heißen Kühlgase zu rechnen.

Aufgabe der Erfindung ist es nun, auch bei extrem großen Kühlkammern für einen gleichmäßigen Austritt des Kreislaufgases aus der Koksschüttung zu sorgen und somit bei optimaler Ausnutzung der Wärme noch in der Kühlkammer zu einer gleichmäßigen Abkühlung des Kokses zu kommen.

Zur Lösung der Aufgabe wird erfindungsgemäß für eine Kokstrokkenkühlung gemäß Oberbegriff des Anspruches 1 vorgeschlagen, daß zur Erreichung eines gleichmäßigen Abzuges des Kreislaufgases aus dem heißen Koks über den Umfang des Koksschüttkegels die Abstände zwischen den Rohren unterschiedlich sind. Den jeweiligen Erfordernissen entsprechend läßt sich dadurch eine Verteilung des Kreislaufgases über den Querschnitt der Kühlkammer erreichen. Insbesondere sollen zum Anschluß des oder der zu den Abhitzekesseln führenden Verbindungskanäle hin die Abstände der Rohre abnehmen. Dadurch werden an den Stellen, zu denen das Kreislaufgas bevorzugt hinströmt, zusätzliche Druckverluste eingebaut und an den von den Verbindungskanälen aus gesehen entfernteren Stellen werden größere Querschnitte zur Verfügung gestellt. Insbesondere ist es hierdurch möglich, die Gasmengen gleichmäßig verteilt über den Querschnitt aus der Kühlkammer in den Abzugskanal zu ziehen. Bei Anschluß eines seitlichen Verbindungskanales hat es sich erfindungsgemäß als günstig erwiesen, die Abstände zwischen den Rohren an der dem Verbindungskanal abgekehrten Seite 2- bis 5-mal so groß zu machen wie an der Seite, wo sich der Anschluß des Verbindungskanales befindet. Bei Anschluß zweier Verbindungskanäle sollen die Abstände zwischen den Rohren in der Mitte zwischen den Anschlüssen 2- bis 3-mal so groß wie in der Nähe der Anschlüsse sein. Es hat sich gezeigt, daß gerade diese Abstufung der Abstände zwischen den Rohren für eine gleichmäßige Verteilung des Kreislaufgases ausreicht.

Zur weiteren Verbesserung des indirekten Wärmeüberganges und zur Vereinfachung der Konstruktion hat es sich schließlich als günstig erwiesen, in dem etwa waagerechten oder zum Abhitzekessel hin geneigten Verbindungskanal über den gesamten Querschnitt verteilt zusätzliche Rohrbündelpakete zur Vorverdampfung oder auch Überhitzung anzuordnen.

Es hat sich als besonders günstig erwiesen, die Rohrbündel mit einem Abstand von 200 bis 800 mm, vorzugsweise 200 bis 400 mm, über dem Koksschüttkegel anzuordnen. Dieser Abstand reicht vor allem auch aus, daß eventuell vom Kreislaufgas mitgerissene kleine Koksstückchen wieder absinken und ebenfalls von den Rohrbündeln ferngehalten werden können.

Erfindungsgemäß wird vorgeschlagen, daß der Abzugskanal oberhalb der Rohrbündel von der nahezu waagerechten, um die Beschickungsöffnung herum angeordneten Kühlkammerdecke und den senkrechten Außenwänden der Kühlkammer sowie den Rohrbündeln selbst gebildet wird. Es hat sich gezeigt, daß dieser dreieckige Kanal ausreicht, um das gesamte Kreislaufgas zum Anschluß des Verbindungskanales und zum Abhitzekessel zu leiten. Das gilt insbesondere dann, wenn die untere Beschickungsöffnung an der Vorkammer einen erheblich kleineren Querschnitt aufweist als die Kühlkammer. Zweckmäßigerweise sind dabei erfindungsgemäß die gesamte Kühlkammerdecke um die Beschickungsöffnung herum ebenso wie die Außenwände der Kühlkammer und die Wände der Verbindungsleitung zu den Abhitzekesseln als Verdampferflächen ausgebildet. Einerseits können schüttgutfreie Austauschoberflächen ohne Zwischenraum geschaffen werden und andererseits werden dadurch die tragenden Außenwände und die Decke der Kühlkammer vor der extremen Strahlungshitze geschützt.

Man kann nun auch den gesamten Raum um den Koksschüttkegel herum bis zur Kühlkammerdecke und zu den Außenwänden der Kühlkammer mit Rohrbündeln ausfüllen. Hierdurch wird bereits in der Kühlkammer so viel Wärme wie möglich indirekt an ein Kühlmedium übertragen. Man kann dadurch in der Kühlkammer noch mehr hochgespannten Dampf erzeugen als bei den bisherigen Einrichtungen. Die Kreislaufgasmenge und auch die Größe der nachgeschalteten Abhitzekessel werden dadurch zusätzlich verringert.

Die Erfindung wird anhand der beigefügten Figuren 1 bis 5 beispielsweise näher erläutert.

Es zeigen :

Figur 1 die Kokstrockenkühlanlage mit Vorkammer sowie nachgeschaltetem Abhitzekessel und Entstauber,

Figur 2 die Kokstrockenkühleinrichtung und Vorkammer in einem vertikalen Schnitt gemäß Linie I-I von Figur 1,

Figur 3 als Einzelheit aus Figur 1 einen Querschnitt gemäß Linie II-II durch den Verbindungskanal,

Figur 4 das Oberteil des Inneren der Kühlkammer in der Seitenansicht und

Figur 5 das Oberteil der Kühlkammer in der Draufsicht.

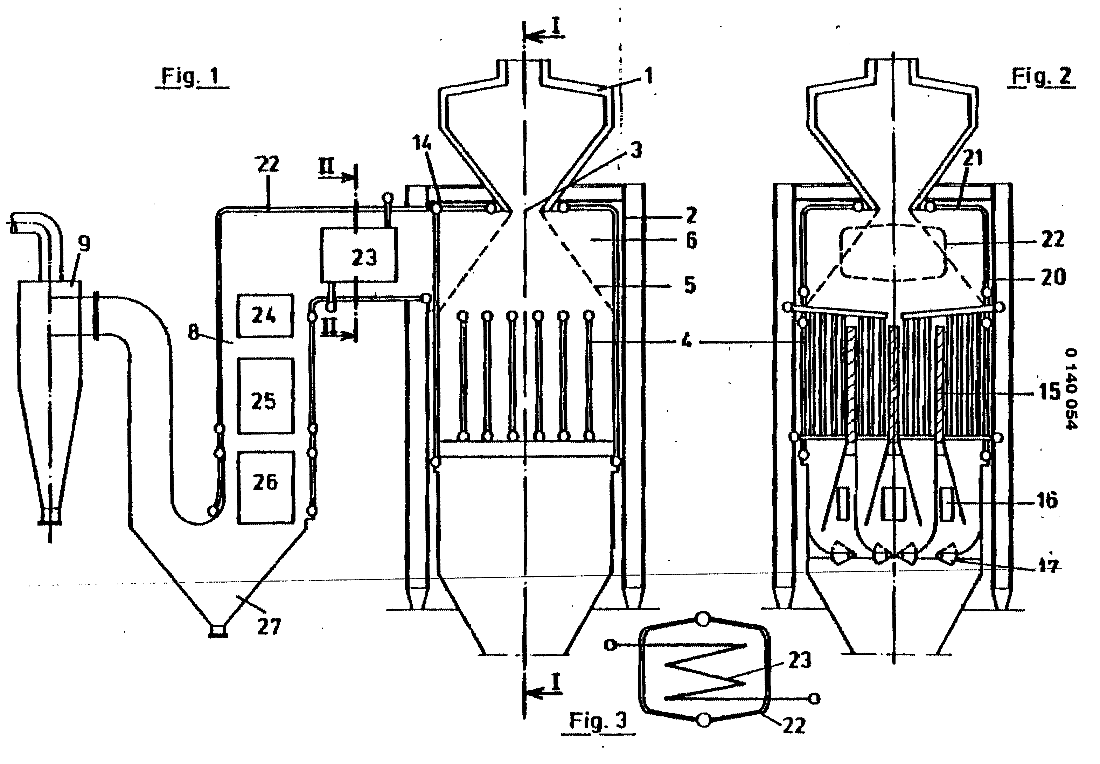

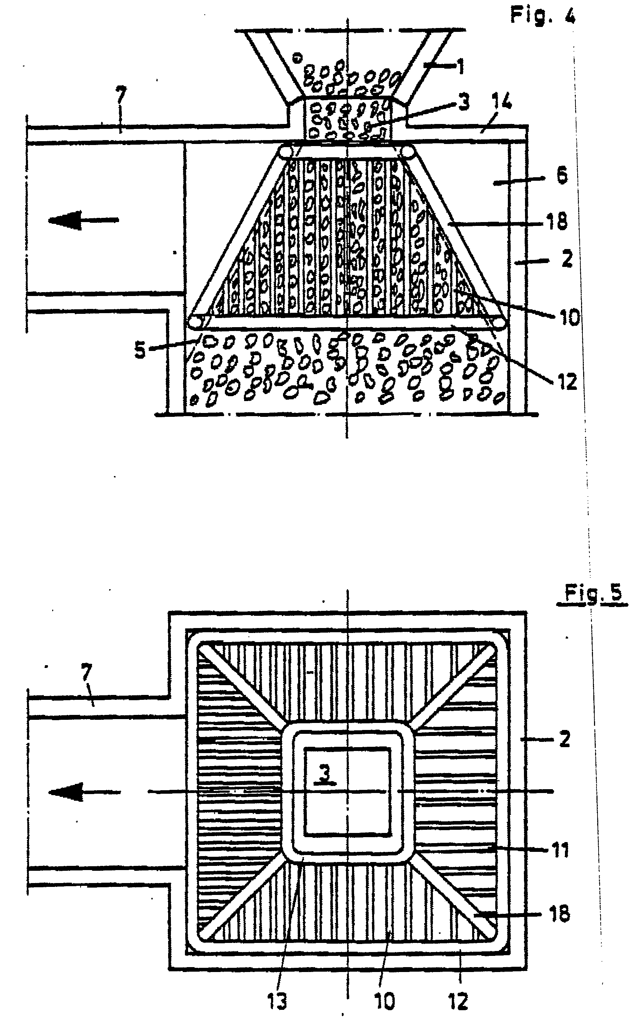

In den Figuren ist mit (1) die Vorkammer oberhalb der Kühlkammer (2) bezeichnet. Im unteren Bereich ist die Vorkammer trichterförmig verengt bis zu der Beschickungsöffnung (3) am Übergang zur Kühlkammer (2). In der Kühlkammer befinden sich die inneren, parallel zueinander angeordneten Kühlwände (4), zwischen denen sich der Koks langsam nach unten bewegt, bis er mit Hilfe der Koksaustragswippen (17) (vgl. Figur 2) aus der Kühlkammer ausgetragen wird. Entgegen seiner Transportrichtung wird der Koks von unten nach oben mit Kreislaufgas, das über horizontale Kanäle (16) und untere kalibrierte Austrittsöffnungen in die Kühlkammer geleitet wird, gekühlt. Das Kreislaufgas strömt von unten nach oben durch die Koksschüttung und wird oberhalb des Koksschüttkegels (5) durch den Abzugskanal (6) über den seitlichen Verbindungskanal (7) in die nachgeschalteten Abhitzekessel (8) und die Feinentstauber (9) gezogen. In der Kühlkammer wird das heiße Schüttgut und auch das entgegenströmende Kreislaufgas in einer Reihe von rechteckigen oder quadratischen Kammern geführt, die einerseits von den parallel zueinander geordneten Kühlwänden (4), andererseits von den senkrecht dazu verlaufenden Stützwänden (15) aus feuerfestem Material gebildet werden. In den Figuren 1 und 2 sind oberhalb des Schüttkegels (5) lediglich die Verdampferflächen direkt vor den Außenwänden dargestellt. Innerhalb der senkrechten Außenwände (2) der Kühlkammer befinden sich ebenfalls senkrecht die Verdampferflächen (20), und unterhalb der nahezu waagerechten Kühlkammerdecke (14) liegen die Verdampferflächen (21). Im dargestellten Fall der Figur 1 reichen die Verdampferflächen (20) von unterhalb des unteren Endes der inneren Kühlwande bis oben zur Kühlkammerdecke (14) und bilden eine Einheit mit den waagerechten Verdampferflächen (21). Auch die Innenwände des sich an die Kühlkammer direkt anschließenden, nahezu waagerechten Verbindungskanales (7) und des Abhitzekessels (8) sind mit Verdampferflächen (22) ausgerüstet. Zur besseren Oberschaubarkeit sind in den Figuren 1 und 2 die erfindungsgemäß vorgeschlagenen Rohrbündel oberhalb des Koksschüttkegels (5), nicht dargestellt. Sie sind aus den Figuren 4 und 5 zu entnehmen, während in den Figuren 4 und 5 wiederum die äußeren Verdampferflächen (20), (21) und (22) nicht dargestellt sind. Die Kombination von beiden wird aber erfindungsgemäß als die Anordnung zur optimalen Ausnutzung der Wärme innerhalb der Kühlkammer angesehen. Gemäß den Figuren 4 und 5 befindet sich oberhalb des Koksschüttkegels (5) ein etwa dachförmiger Schirm aus Verdampferrohren (10) bis (13) mit einer oberen, etwa quadratischen Beschickungsöffnung (3). Ausgehend von einer unteren, waagerecht umlaufenden Verteilleitung (12) führen senkrecht dazu schräg nach oben die Einzelrohre (10) und (11), die, über den Umfang des Schüttkegels verteilt, verschieden große Abstände voneinander haben. Die schräg nach oben führenden Einzelrohre (10) und (11) enden teils in den diagonal schräg nach oben führenden Sammlern (18) und teils in der oberen um die Beschickungsöffnung (3) herum verlaufenden Sammelleitung (13). Die von den einzelnen vier Seiten der Kühlkammer schräg nach oben führenden Rohrbündel (10) und (11) können auch für jede einzelne Seite als trapezförmiges Rohrgitter mit eigenem schrägen Sammler (18) und oberer Sammelleitung (13) sowie einer eigenen Wasserführungs- und Dampfabführungsleitung ausgerüstet sein. Es ist auch nicht ausgeschlossen, daß eventuell mehrere Rohrbündelgitter übereinander angeordnet sind. Wie insbesondere aus der Figur 5 ersichtlich ist, besitzen die Rohre (10) und (11) stark unterschiedliche Abstände. Im Bereich des Anschlusses des Abzugskanales (6) zum Verbindungskanal (7) hin nehmen die Abstände der Rohre voneinander stark ab, während sie an der gegenüberliegenden Seite sehr groß sind. Dadurch kann verhindert werden, daß alle Kreislaufgase bereits in der Nähe der Anschlußstelle des Verbindungskanales (7) durch die Rohrbündel nach oben strömen. Aufgrund der interschiedlichen Abstände ist gewährleistet, daß auch an der gegenüberliegenden Seite das Kreislaufgas zunächst nach oben in den Abzugskanal (6) strömt und dann oberhalb der Rohre (10), (11) und (18) zum Verbindungskanal (7) strömt. Zur besseren Ausnutzung der vorhandenen Strömungsquerschnitte und damit zur Verringerung der gesamten Abmessungen der Wärmeaustauscheinrichtungen sind in dem Verbindungskanal (7) bereits im oberen waagerechten Teil über den gesamten Querschnitt verteilt Verdampferrohrbündel (23) angeordnet. Nach Durchströmen dieser Verdampferrohrbündel (23) gelangt das Kreislaufgas in den senkrechten Teil des Abhitzekessels (8) und durchströmt dort nacheinander das Überhitzerpaket (24), das Verdampferpaket (25) sowie den Speisewasservorwärmer (26), bevor es in den Feinstaubabscheider (9) gelangt. Unterhalb der Wärmeaustauscheinrichtungen (24), (25) und (26) befindet sich der trichterförmige Feinstaubabzug (27).

Bezugszeichenliste

(1) Vorkammer (Außenwand)
(2) Kühlkammer (Außenwand)
(3) Beschickungsöffnung von (1) nach (2)
(4) parallele Kühlwände
(5) Koksschüttkegel (angedeutet)
(6) Abzugskanal
(7) Verbindungskanal (Außenwand von (2) und (8))
(8) Abhitzekessel
(9) Feinentstauber
(10) Rohrbündel
(11) Rohrbündel
(12) Verteilleitungen
(13) Sammler
(14) Kühlkammerdecke
(15) Stützwände für (4)
(16) Zuführungskanäle für Kreislaufgas
(17) Austragswippen
(18) Sammler

(20) innere Verdampferflächen an (2)
(21) innere Verdampferflächen an (14)
(22) innere Verdampferflächen an (7)
(23) Verdampferrohrbündel in (7)
(24) Überhitzerpaket
(25) Verdampferpaket
(26) Speisewasservorwärmer
(27) Feinstaubabzug

**Patentansprüche**

1. Kokstrockenkühleinrichtung mit einer oberen Öffnung zur Beschickung einer Kühlkammer mit senkrechten äußeren Wänden, einer um die Beschickungsöffnung herum angeordneten, nahezu waagerechten Kühlkammerdecke und inneren parallel zueinander angeordneten Wänden und unteren Koksaustragseinrichtungen sowie unteren Zuführungen und oberhalb der Koksschüttung an die Kühlkammer angeschlossenen Abführungen für das Kreislaufgas, wobei in der Kühlkammer mit einem Abstand oberhalb der Koksschüttung, nahezu parallel zum Koksschüttkegel, vom heißen Kreislaufgas umströmte Rohrbündel angeordnet sind, dadurch gekennzeichnet, daß zur Erreichung eines gleichmäßigen Abzuges des Kreislaufgases aus dem heißen Koks über den Umfang des Koksschüttkegels (5) die Abstände zwischen den Rohren (10), (11) unterschiedlich sind.

2. Kokstrockenkühleinrichtung nach Anspruch 1, dadurch gekennzeichnet, daß zum Anschluß des oder der zu den Abhitzekesseln (8) führenden Verbindungskanäle (7) hin die Abstände der Rohre (10), (11) abnehmen.

3. Kokstrockenkühleinrichtung nach Anspruch 2, dadurch gekennzeichnet, daß bei Anschluß eines Verbindungskanales (7) die Abstände zwischen den Rohren (10), (11) an der dem Verbindungskanal abgekehrten Seite 2- bis 5-mal so groß sind wie an der Anschlußseite.

4. Kokstrockenkühleinrichtung nach Anspruch 2, dadurch gekennzeichnet, daß bei Anschluß zweier Verbindungskanäle (7) die Abstände zwischen den Rohren in der Mitte zwischen den Anschlüssen etwa 2- bis 3-mal so groß sind wie in der Nähe der Anschlüsse.

5. Kokstrockenkühleinrichtung nach den Ansprüchen 1 bis 4, dadurch gekennzeichnet, daß in dem etwa waagerechten oder zum Abhitzekessel (8) hin geneigten Verbindungskanal (7) über den gesamten Querschnitt verteilt Verdampferrohrbündel (23) angeordnet sind.

6. Kokstrockenkühleinrichtung nach Anspruch 1, dadurch gekennzeichnet, daß die Rohrbündel (10), (11) mit einem Abstand von 200 bis 800 mm, vorzugsweise 200 bis 400 mm, über dem Koksschüttkegel (5) angeordnet sind.

7. Kokstrockenkühleinrichtung nach den Ansprüchen 1 bis 5, dadurch gekennzeichnet, daß der Abzugskanal (6) oberhalb der Rohrbündel (10), (11) von der nahezu waagereghten, um die Beschickungsöffnung (3) herum angeordneten Kühlkammerdecke (14) und den senkrechten Außenwänden der Kühlkammer (2) sowie den Rohrbündeln (10), (11) gebildet wird.

8. Kokstrockenkühleinrichtung nach den Ansprüchen 1 bis 7, dadurch gekennzeichnet, daß die gesamte Kühlkammerdecke (14) um die Beschickungsöffnung (3) herum ebenso wie die Außenwände der Kühlkammer (2) und die Wände der Verbindungsleitung (7) zu den Abhitzekesseln (8) als Verdampferflächen (20), (21), (22) ausgebildet sind.

9. Kokstrockenkühleinrichtung nach den Ansprüchen 1 bis 8, dadurch gekennzeichnet, daß der gesamte Raum um den Koksschüttkegel (5) herum bis zur Kühlkammerdecke (14) und den Außenwänden der Kühlkammer (2) mit Rohrbündeln ausgefüllt ist.

**Claims**

1. A coke dry quenching unit whith an upper opening to charge a cooling chamber equipped with vertical outer walls, a cooling chamber top flooring being nearly horizontal and arranged around the chargehole, and inner walls arranged in parallel to each other, and lower coke discharge facilities as well as lower feeders and discharging ducts for the circulating gas connected to the cooling chamber above the coke batch, with there being tube bundles flown over by hot circulating gas and being located in the cooling chamber at a defined distance above the coke batch arranged nearly parallel to the coke batch cone, characterized in that said distances between tubes (10), (11) are different in order to achieve a uniform discharge of circulating gas from the hot coke over the circumference of said coke batch cone (5).

2. A coke dry quenching unit as claimed in Claim 1, characterized in that said distances between tubes (10), (11) decrease towards the connection point of connecting ducts (7) extending to the waste heat boilers (8).

3. A coke dry quenching unit as claimed in Claim 2, characterized in that the distances between tubes (10), (11) at the side averted from the connecting duct are by 2 times up to 5 times as large as they are at the connection side on connection of a connecting duct (7).

4. A coke dry quenching unit as claimed in Claim 2, characterized in that on connection of two connecting ducts (7) the distances between the tubes in the middle between the connections are roughly by 2 times to 3 times as large as they are in the vicinity of the connections.

5. A coke dry quenching unit as claimed in any one of Claims 1 to 4, characterized in that evaporation tube bundles (23) are located in the roughly horizontal or, towards the waste heat boiler (8), inclined connecting duct (7) spread over the full cross-section.

6. A coke dry quenching unit as claimed in Claim 1, characterized in that said tube bundles (10), (11), are located at a spacing of 200 to 800 mm, preferably at a 200 to 400 mm spacing, above the coke batch cone (5).

7. A coke dry quenching unit as claimed in any one of Claims 1 to 7, characterized in that the discharge duct (6) above the tube bundles (10), (11), is formed by the nearly horizontal cooling chamber top flooring (14) arranged around the cooling chamber chargehole (3) and by the vertical outer walls of said cooling chamber (2) as well as by the tube bundles (10), (11).

8. A coke dry quenching unit as claimed in any one of Claims 1 to 7, characterized in that the entire cooling chamber top flooring (14) around the chargehole opening (3) as well as the outer walls of said cooling chamber (2) and the walls of the connecting duct (7) extending to the waste heat boilers (8) are designed to serve as evaporation surfaces (20), (21), (22).

9. A coke dry quenching unit as claimed in any one claim of Claims 1 to 8, characterized in that the entire space around the coke batch cone (5) up to said cooling chamber top flooring (14) and the outer walls of said cooling chamber (2) is filled with tube bundles.

**Revendications**

1. Installation de refroidissement à sec du coke munie à sa partie supérieure d'une ouverture pour charger une chambre de refroidissement avec des parois verticales extérieures, d'une couverture de la chambre de refroidissement à peu près horizontale disposée autour de l'ouverture de chargement, des parois intérieures disposées en parallèle, d'un dispositif de déchargement du coke à la partie inférieure de l'installation de refroidissement, de conduits d'amenée inférieurs ainsi que de tuyaux abducteurs pour le gaz de circuit raccordés à la chambre de refroidissement au-dessus du dispositif de charge du coke. Dans la chambre de refroidissement, dans une certaine distance, au-dessus du dispositif de charge du coke, des faisceaux de tubes entourés du gaz de circuit chaud sont disposés à peu près en parallèle au cône de chargement du coke. L'installation de refroidissement à sec du coke est caractérisée par le fait que, pour atteindre une extraction uniforme du gaz de circuit à partir du coke chaud sur le périmètre du cône de chargement du coke (5), les distances entre les tuyaux (10), (11) varient.

2. Installation de refroidissement à sec du coke selon revendication 1, caractérisée par le fait qu'en direction du raccordement du conduit ou des conduits de connexion (7) aboutissant aux chaudières de récupération, les distances entre les tuyaux (10), (11) diminuent.

3. Installation de refroidissement à sec selon revendication 2 caractérisée par le fait que, lors du raccordement d'un conduit de connexion (7), les distances entre les tuyaux (10), (11) sont 2 à 5 fois plus grandes au côté éloigné du conduit de connexion par rapport à celui du raccordement.

4. Installation de refroidissement à sec selon revendication 2 caractérisée par le fait que, lors du raccordement de deux conduits de connexion (7), les distances entre les tuyaux au milieu des raccordements sont 2 à 3 fois plus grandes que celles dans le voisinage des raccordements.

5. Installation de refroidissement à sec selon les revendications 1 à 4 caractérisée par le fait que des faisceaux de tubes évaporatoires (23) sont répartis sur la section transversale complète du conduit de connexion (7) à peu près horizontale ou incliné vers la chaudière de récupération (8).

6. Installation de refroidissement à sec selon revendication 1 caractérisée par le fait que les faisceaux de tubes (10), (11) sont disposés dans une distance de 200 à 800 mm, de préférence 200 à 400 mm, au-dessus du cône de chargement du coke (5).

7. Installation de refroidissement à sec selon les revendications 1 à 5 caractérisée par le fait que le conduit d'extraction (6) au-dessus des faisceaux de tubes (10), (11) est formé d'une part par la couverture de la chambre de refroidissement (14) à peu près horizontale et disposée autour de l'ouverture de chargement (3) et de l'autre par les parois extérieures et verticales de la chambre de refroidissement (2) ainsi que par les faisceaux de tubes (10), (11).

8. Installation de refroidissement à sec du coke selon les revendications 1 à 7 caractérisée par le fait que la couverture complète de la chambre de refroidissement (14) autour de l'ouverture de chargement (3) ainsi que les parois extérieures de la chambre de refroidissement (2) et les parois du conduit de connexion (7) aux chaudières de récupération (8) sont développées comme des surfaces évaporatoires (20), (21), (22).

9. Installation de refroidissement à sec du coke selon les revendications 1 à 8 caractérisée par le fait que l'espace total autour du cône de chargement du coke (5) jusqu'à la couverture de la chambre de refroidissement (14) et aux parois extérieures de la chambre de refroidissement est rempli des faisceaux des tubes.

0 140 054

Fig. 1

Fig. 2

Fig. 3

Fig. 4

Fig. 5